# EUROPÄISCHE PATENTSCHRIFT

(11) **EP 0 853 961 B1**
(45) Veröffentlichungstag und Bekanntmachung des Hinweises auf die Patenterteilung: **27.03.2002**
(21) Anmeldenummer: 97121719.5
(22) Anmeldetag: 10.12.1997
(51) Int. Cl.: A63B 21/005

(54) **Trainingsgerät**
Training apparatus
Appareil de musculation

(30) Priorität: 21.12.1996 DE 19653862
(43) Veröffentlichungstag der Anmeldung: 22.07.1998
(73) Patentinhaber: Miehlich, Dieter, 86494 Emersacker (DE)
(72) Erfinder: Miehlich, Dieter, 86494 Emersacker (DE)
(74) Vertreter: Munk, Ludwig, Dipl.-Ing.

(56) Entgegenhaltungen:
- DE-A- 2 436 748
- DE-A- 3 532 444
- FR-A- 2 709 067

## Beschreibung

Die Erfindung betrifft ein Trainingsgerät, insbesondere für Krafttraining, mit einer Drehmomenterzeugungseinrichtung, die einen Elektromotor und ein Untersetzungsgetriebe aufweist und deren Ausgang mit wenigstens einem der Übungsperson dargebotenen Übungsorgan zusammenwirkt, wobei der Elektromotor als Drehstrommotor ausgebildet ist, dem als Leistungsteil ein Frequenzumrichter zugeordnet ist, mittels dessen die Frequenz und die Stärke des dem Elektromotor zugeführten Drehstroms einstellbar sind, und wobei die Stromstärke zumindest in Abhängigkeit vom gewünschten Drehmoment einstellbar ist und ferner die Frequenz so einstellbar ist, daß die Drehzahl des Drehfelds des dem Elektromotor zugeführten Drehstroms um eine vorgegebene Schlupfdrehzahl von der anhand der Meßwerte einer dem Ausgang der Drehmomenterzeugungseinrichtung zugeordneten Positionsmeßeinrichtung errechenbaren tatsächlichen Drehzahl des Elektromotors abweicht.

Aus der DE 35 41 501 C2 ist ein Trainingsgerät bekannt, das als Antrieb einen Einphasen-Wechselstrommotor aufweist, dem ein separates Getriebe nachgeordnet ist. Am Ausgang des Getriebes ist ein Meßglied vorgesehen, das den Ist-Wert des Drehmoments aufnimmt. Zwischen dem Elektromotor und dem Getriebe ist eine als Wirbelstromkupplung ausgebildete Rutschkupplung angeordnet. Diese ist zum einen auf der Motorwelle montiert und zum anderen über eine mit einer Ausgleichskupplung versehene Zwischenwelle mit dem Untersetzungsgetriebe verbunden, das separat vom Motor auf einem Fundament aufgenommen ist. Diese bekannte Anordnung erfordert demnach einen hohen baulichen Aufwand. Das gewünschte, von der Übungsperson aufzubringende Moment wird hier an der Rutschkupplung eingestellt. Der Motor dreht hier immer mit einer vergleichsweise hohen Drehzahl. Dies führt zu einer nicht unbeträchtlichen Lärmentwicklung. Zudem können sich in Folge der Motordrehzahl Vibrationserscheinungen ergeben. Das zur Erfassung des Drehmoment-lst-Werts im Bereich des Getriebeausgangs vorgesehene Meßglied wird hierbei während jeder Übungsphase bewegt, was sich ungünstig auf die Lebensdauer der Anschlüsse der Signalleitungen auswirkt. Der gemessene Drehmoment-Ist-Wert wird bei der bekannten Anordnung mit einem vorgegebenen Soll-Wert verglichen. Es ergibt sich demnach ein geschlossener Regelkreis. Dieser erweist sich als sehr träge und schwingungsgefährdet. Es ist daher bei der bekannten Anordnung nicht möglich, Beschleunigungsmomente auszugleichen. Bei einer stärkeren Beschleunigung des Übungsorgans durch die Übungsperson erfährt diese dementsprechend eine hohe Überbeanspruchung.

Des weiteren ist aus der FR 2 709 067 A1 ein Trainingsgerät bekannt, das gegenüber dem zuvor beschriebenen in einigen Punkten verbessert ist. Anstatt über eine Rutschkupplung wird die Belastung der Übungsperson hier über den Strom des Antriebsmotors eingestellt, der als Drehstrommotor ausgebildet ist. Dessen Drehzahl wird von einem Drehratensensor erfaßt, der als Ausgangssignale zwei um neunzig Grad gegeneinander phasenverschobene Recheckpulse mit drehzahlproportionaler Frequenz liefert. Eine Vorverarbeitungseinheit ermittelt aus diesen ein die Drehrichtung angebendes Binärsignal und gibt dieses sowie einen einzigen Puls mit drehzahlproportionaler Frequenz an eine Recheneinrichtung ab. Diese erzeugt einen weiteren Puls mit einer Frequenz, welche je nach ermittelter Drehrichtung durch Addition oder Subtraktion einer von einem Taktgenerator vorgegebenen Frequenz zu bzw. von der drehzahlproportionalen Frequenz gebildet wird. Der so erhaltene weitere Puls steuert über einen Vorwärts-Rückwärts-Zähler, einen Tabellenspeicher und einen Digital-Analog-Wandler die Richtung und die Winkelgeschwindigkeit des Drehfeldes des Motors, wodurch ein optimaler Schlupf zwischen der Drehzahl des Feldes und derjenigen des Rotors eingestellt wird.

Zur Regelung des Drehmoments des Motors ist ein weiterer Signalpfad vorgesehen, an dessen Eingang sich ein Kraftsensor befindet, der an einem Lager des den Motor mit dem Übungsorgan verbindenden Getriebes angeordnet ist. Das von diesem Kraftsensor abgegebene Signal wird in einem analogen Vergleicher mit einem einstellbaren Sollwert verglichen. Das Ergebnis dieses Vergleichs beeinflußt über den zuvor erwähnten Digital-Analog-Wandler den Motorstrom und damit das Drehmoment. Das Konzept dieses Trainingsgerätes beinhaltet also zwei Sensoren und zwei miteinander gekoppelte Regelschleifen, von denen eine teilweise frequenzanalog ausgebildet ist. Seine Realisierung ist baulich wie schaltungstechnisch sehr aufwendig. Von diesem Trainingsgerät wird hier mit dem Oberbegriff des Anspruchs 1 als nächstliegendem Stand der Technik ausgegangen.

Schließlich zeigt noch die DE 35 42 444 A1 ein Trainingsgerät, welches ebenso wie das zuvor beschriebene einen Drehstrommotor als Antrieb und zwei verschiedene Sensoren, nämlich einen Winkelaufnehmer und einen Drehmomentaufnehmer, aufweist. Dieses Trainingsgerät soll jedoch einen schwenkbaren Trainingsarm weitestgehend unabhängig von der durch die Übungsperson aufgebrachten Kraft bewegen, wozu ein gegenüber dem von der Übungsperson zu erwartenden Drehmoment deutlich höheres Drehmoment des Motors vorgesehen ist, das nicht geregelt zu werden braucht. Die genannten Sensoren sollen lediglich eine winkelabhängige Aufzeichnung oder Anzeige der von der Übungsperson aufgewendeten Kraft ermöglichen sowie bei Überschreitung einer vorgebbaren Maximalkraft den Antrieb zum Schutz der Übungsperson vor einer Überbelastung abschalten. Insofern unterscheidet sich dieses Gerät trotz gewisser Gemeinsamkeiten in der Sensorik sowie im Antrieb funktional deutlich von den beiden zuvor erwähnten. In seiner baulichen und schaltungstechnischen Komplexität ist es aber mit dem zuletzt erwähnten vergleichbar. Die vorgeschlagene Drehmomentmessung über eine Meßwelle, ein im Betrieb bewegtes Teil, stellt wie bei dem Gerät nach der erstgenannten DE 35 41 501 C2 einen besonderen Schwachpunkt für die Zuverlässigkeit dar.

Hiervon ausgehend ist es daher die Aufgabe der vorliegenden Erfindung, eine Vorrichtung eingangs erwähnter Art zu schaffen, die vergleichsweise einfach und kostengünstig aufgebaut ist und dennoch einen hohen Trainingskomfort ermöglicht.

Diese Aufgabe wird erfindungsgemäß dadurch gelöst, daß dem Frequenzumrichter eine Recheneinrichtung vorgeordnet ist, in die alle maschinenspezifischen Werte eingespeichert sind und ein gewünschtes Drehmoment eingebbar ist, und die dem Frequenzumrichter zuleitbare, der Stärke und der Frequenz des dem Elektromotor zuleitbaren Drehstroms zugeordnete Ausgangssignale erzeugt, wobei in die Recheneinrichtung als einzige Meßwerte diejenigen der Positionsmeßeinrichtung eingehen.

Bei der erfindungsgemäßen Anordnung bildet der Drehstrommotor, der kostengünstig und robust ist und keine Verschleißteile enthält, das steuerbare, elastische Element. Eine steuerbare Rutschkupplung in Form einer Wirbelstromkupplung oder dergleichen wird daher in vorteilhafter Weise nicht benötigt. Das Untersetzungsgetriebe kann daher in vorteilhafter Weise direkt an den Motor angebaut sein, so daß keine separate Aufnahme des Getriebes auf einem Fundament notwendig ist und Fluchtungsfehler ausgeschlossen sind. Der hier vorgesehene Drehstrommotor läuft während des Übungsbetriebs auch nicht mit seiner normalen Drehzahl, sondern wird entweder entgegen seinem normalen Drehsinn durchgezogen oder gebremst oder gehalten. Es ergeben sich daher nur vergleichsweise kleine negative oder positive Drehzahlen nahe dem Stillstandsbereich. Schwingungen und Vibrationen sowie Lärmentwicklung sind daher in vorteilhafter Weise nicht zu befürchten. Außerdem ist es hierbei leicht möglich, mit dem Elektromotor die Bewegung des Übungsorgans zu unterstützen, was eine Verwendung der erfindungsgemäßen Anordnung im Reha-Bereich ermöglicht.

Der entscheidende Vorteil der erfindungsgemäßen Maßnahmen ist darin zu sehen, daß durch die Einspeicherung aller maschinenspezifischen Werte in die Recheneinrichtung ein reiner Stellerbetrieb, d.h. eine Steuerung ohne Ist-Wert-Messung des Drehmoments, möglich ist. Die Verwendung eines geschlossenen Regelkreises mit der Gefahr von Regelkreisschwingungen kann daher unterbleiben. Es genügt in vorteilhafter Weise eine reine Positionsmessung, aus der unter Berücksichtigung eines Zeittakts die Geschwindigkeit und die Beschleunigung des Übungsorgans und damit auch des drehschlüssig hiermit verbundenen Motors rechnerisch ermittelt werden können. Dies ermöglicht in vorteilhafter Weise die Verwendung eines stationären Meßglieds, was sich vorteilhaft auf die Lebensdauer auswirkt. Gleichzeitig ergibt der mit den erfindungsgemäßen Maßnahmen ermöglichte Stellerbetrieb auch eine hohe Ansprechgeschwindigkeit, so daß dynamische Belastungen rechnerisch ausgeglichen werden, wodurch sichergestellt wird, daß die Übungsperson auch im Falle stark beschleunigter, ruckartiger Bewegungen keine Überbelastung erfährt. Ferner lassen sich besonders geringe Totzeiten und damit ein besonders hoher Trainingskomfort erreichen.

Vorteilhafte Ausgestaltungen und zweckmäßige Fortbildungen der übergeordneten Maßnahmen sind in den Unteransprüchen angegeben. So können z. B. in vorteilhafter Weise der Elektromotor und das Untersetzungsgetriebe zu einer als Getriebemotor ausgebildeten Baueinheit zusammengefaßt sein. Auch kann ein Frequenzumrichter mit sensorloser Regelung verwendet werden, da die Recheneinrichtung die Steuersignale für den Frequenzumrichter errechnet.

Eine weitere vorteilhafte Ausgestaltung der übergeordneten Maßnahmen kann darin bestehen, daß der Recheneinrichtung eine Bedieneinrichtung zur Vorgabe des gewünschten Drehmoments vorgeordnet ist. Die Bedieneinrichtung kann dabei einfach manuell bedienbar sein und/oder mit einem zentralen Datenspeicher vernetzt und/oder mit einer Kundenidentifizierungseinrichtung versehen sein. Auch diese Maßnahmen wirken sich vorteilhaft auf den erzielbaren Trainingskomfort aus.

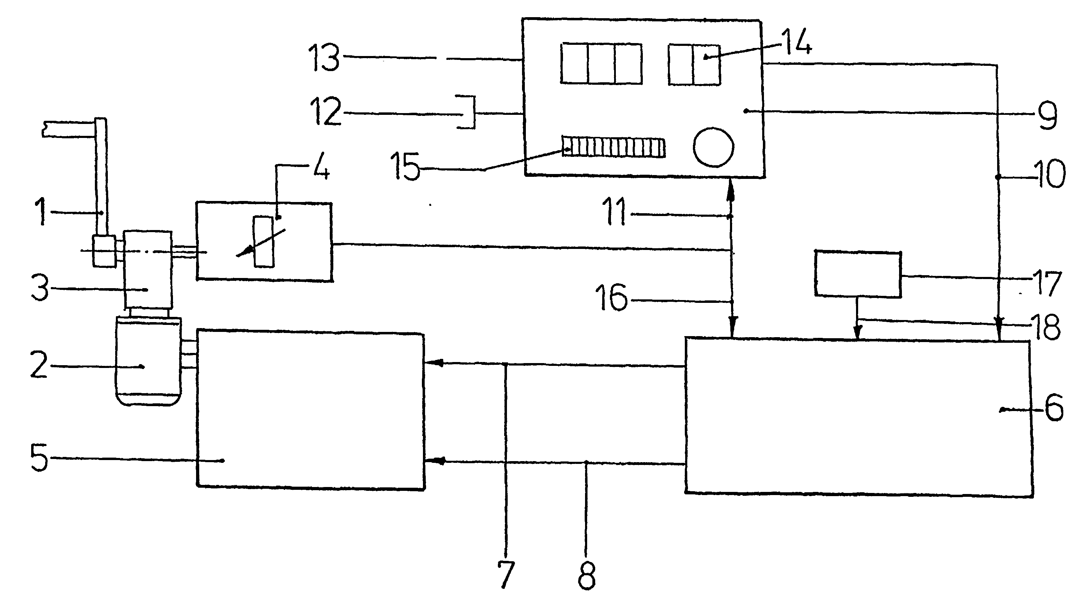

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung entnehmbar.

Die nachstehend beschriebene Zeichnung enthält ein Blockschaltbild eines erfindungsgemäßen Krafttrainingsgeräts.

Das der Zeichnung zugrunde liegende Krafttrainingsgerät enthält eine als Übungsorgan fungierende Kurbel 1, die von der Übungsperson erfaßt und in der aktiven Phase unter Überwindung eines an ihr angreifenden Gegenmoments bewegt und in der passiven Phase entgegen der Wirkung des sie antreibenden Moments gehalten bzw. abgebremst wird. Das geräteseitig an der Kurbel 1 angreifende Moment wird mittels einer Drehmomenterzeugseinrichtung erzeugt, die einen Elektromotor 2 und ein Untersetzungsgetriebe 3 aufweist. Der Elektromotor 2 und das Untersetzungsgetriebe 3 sind zu einer als Getriebemotor ausgebildeten Baueinheit zusammengefaßt, was eine sehr kompakte Bauweise ergibt und die Montage vereinfacht. Bezüglich des genannten Getriebemotors kann auf handelsübliche Bauteile zurückgegriffen werden. Die Kurbel 1 ist an den Ausgang des Untersetzungsgetriebes 3 angesetzt. Mit diesem wirkt auch ein Positionsaufnehmer in Form eines Potentiometers 4 zusammen.

Der Elektromotor 2 ist als Drehstrommotor ausgebildet, dem ein Frequenzumrichter 5 als Leistungsteil zugeordnet ist. Mittels des Frequenzumrichters 5 können die Stärke und die Frequenz des vom Elektromotor 2 aufgenommenen Stroms variiert werden, wodurch das vom Elektromotor 2 abgegebene Drehmoment mit hoher Genauigkeit variiert werden kann. Das von dem als Drehstrommotor ausgebildeten Elektromotor 2 abgegebene Drehmoment hängt mit der Stromstärke I zusammen. Die Einstellgenauigkeit hängt mit der Schlupfdrehzahl des Drehstrommotors zusammen, die den Unterschied zwischen der tatsächlichen Drehzahl des Drehstrommotors und der Drehzahl des Drehfelds des Drehstroms darstellt, die durch die Variation der Frequenz f variierbar ist. Durch die Variation der Frequenz f ist es möglich, die Drehzahl des Drehfelds des Drehstroms in einen optimalen Bereich zu bringen bzw. die Schlupfdrehzahl auf einem nahezu konstanten Wert zu halten.

Dem Frequenzumrichter 5 ist eine Recheneinrichtung 6 vorgeordnet, welche die Steuersignale zum Ansteuern des Frequenzumrichters 5 rechnerisch ermittelt. Der Frequenzumrichter 5, mittels dessen die Stromsträrke I und die Frequenz f des dem Elektromotor 2 zugeführten Drehstroms variierbar sind, wird durch zwei Steuersignale angesteuert, die jeweils für die Variation der Stromstärke I und damit des Drehmoments bzw. der Frequenz f und damit der Schlupfdrehzahl zuständig sind. Diese Steuersignale laufen über die Signalleitungen 7 bzw. 8. In beiden Fällen kann es sich dabei um durch die Recheneinrichtung 6 variierbare Spannungswerte eines Steuerstroms handeln. Im vorstehend beschriebenen Beispiel finden demnach Analogwerte Verwendung. Es wäre aber auch ohne weiteres möglich, digitale Signale zur Ansteuerung des Frequenzumrichters 5 zu verwenden, der in der Regel auch eine hierfür vorgesehene serielle Schnittstelle aufweist.

Der Recheneinrichtung 6 ist eine Bedieneinrichtung 9 zugeordnet, durch die die jeweils gewünschte Höhe des an der Kurbel 1 zur Verfügung stehenden Drehmoments als Soll-Wert vorgegeben werden kann wie durch die von der Bedieneinrichtung 9 zur Recheneinrichtung 6 führende Signalleitung 10 angedeutet ist. In einfachen Fällen kann es sich dabei um konstante Werte für die aktive bzw. passive Übungsphase handeln. In der Regel ist es jedoch erwünscht, das an der Kurbel 1 zur Verfügung stehende Drehmoment während jeder aktiven Bewegung bzw. passiven Bewegung entlang einer optimierten Übungskurve zu verändern. Diese kann in die Bedieneinrichtung 9 eingespeichert sein. Da hier eine wegabhängige Veränderung des Soll-Werts erfolgt, wird die Bedieneinrichtung 9 mit den vom Potentiometer 4 aufgenommenen Weginformationen versorgt, wie durch die vom Potentiometer 4 zur Bedieneinrichtung 9 führende Signalleitung 11 angedeutet ist Die genannte Kurve kann auch individuell an den jeweiligen Trainigsstand und dergleichen der Übungsperson angepaßt sein. Die entsprechenden Korrekturwerte können auf einem Speichermedium wie einer Magnetkarte gespeichert sein, das mittels einer an die Bedieneinrichtung 9 angeschlossenen Kartenleseeinrichtung 12 abtastbar ist. Es wäre auch denkbar, derartige Daten und dergleichen in einem zentralen Datenspeicher abzulegen, mit dem die Bedieneinrichtung 9 vernetzt sein kann, wie durch die Vernetzungsleitung 13 angedeutet ist. Die Bedieneinrichtung 9 kann auch mit Displays 14 zur Anzeige der aktuellen bzw. gewünschten Werte sowie mit Tastaturen und Schaltern 15 zur manuellen Eingabe von Daten bzw. zum Ein- und Ausschalten etc. versehen sein.

Die vom Potentiometer 4 aufgenommenen Positionswerte werden auch der Recheneinrichtung 6 zugeführt, wie durch die Signalleitung 16 angedeutet ist. Parallel dazu wird die Recheneinrichtung 6 auch mit einem Zeittakt versorgt, wie durch die von einem Zeittaktelement 17 abgehende Signalleitung 18 angedeutet ist. Aus Gründen der Anschaulichkeit ist das Zeittaktelement 17 hier außerhalb der Recheneinrichtung 6 dargestellt. Es kann aber zweckmäßig auch in die Recheneinrichtung 6 integriert sein. Der gut vorgegebene Zeittakt ist einerseits größer als die Zeit, innerhalb der der Frequenzumrichter 5 neue Signale empfangen kann, und andererseits kleiner als die Reaktionszeit der Übungsperson, also des menschlichen Körpers. Bei Versuchen hat sich ein Zeittakt von 20 Millisekunden als zu bevorzugen erwiesen. Durch Vergleich von im vorgegebenen Zeittakt nacheinander gemessenen Positionswerten kann die Recheneinrichtung 6 die Geschwindigkeit und durch Vergleich der so ermittelten Geschwindigkeiten die Beschleunigung der Kurbel 1 und damit des drehschlüssig hiermit verbundenen Elektromotors 2 ermitteln. In die Recheneinrichtung 6 sind alle maschinenspezifischen Daten bezüglich der mechanischen Trägheit und dergleichen eingespeichert. Hierzu sind in der Recheneinrichtung 6 entsprechende Tabellenregister vorgesehen. Auf diese greift die Recheneinrichtung 6 bei den durchgeführten Rechenoperationen zurück.

Die Recheneinrichtung 6 errechnet aus dem über die Signalleitung 10 eingegebenen, vom gewünschten Drehmoment abhängigen Signal einen Grundwert für das an den Frequenzumrichter 5 abzugebende Steuersignal für die Stromstärke I. Dieses Signal wird in der Recheneinrichtung 6 durch einen aus der errechneten Beschleunigung abgeleiteten Korrekturwert korrigiert, durch den ein dynamisches Element ausgeglichen wird. Hierdurch wird sichergestellt, daß auch bei ruckartigen Bewegungen mit vergleichsweise hoher Beschleunigung keine unerwünscht hohen Momentspitzen auftreten. Die errechnete Geschwindigkeit der Kurbel 1 und damit des Elektromotors 2 wird von der Recheneinrichtung 6 in ein weiteres der Frequenz f zugeordnetes Steuersignal für den Frequenzumrichter 5 umgesetzt, wodurch eine optimale Schlupfdrehzahl des den Elektromotor 2 bildenden Drehstrommotors verwirklicht wird. Da die Recheneinrichtung 6 die an der Kurbel 1 vorhandene Geschwindigkeit und Beschleunigung errechnet und nur eine Positionsmessung erforderlich ist, kann das durch das Potentiometer 4 gebildete Meßglied stationär angeordnet sein.

Die Schlupfdrehzahl des Drehstrommotors beträgt unter Zugrundelegung der normalen Netzfrequenz von 50 Hz etwa 200 - 300 U/Min, also etwa 5- 10 % der Drehzahl des Drehfelds des Drehstroms. Der Drehstrommotor läuft dabei mit etwa 2700- 2800 U/Min. Bei der vorliegenden Anwendung treten an der Kurbel und dementsprechend am den Elektromotor 2 bildenden Drehstrommotor aber viel kleinere Drehzahlen auf, die sich in der Gegend des Stillstandsbereichs befinden. Im Reha-Betrieb, wenn der Elektromotor 2 die Bewegung der Kurbel 1 unterstützt bzw. in einer passiven Übungsphase, wo die Kurbel 1 durch die Übungsperson lediglich gebremst wird, ergeben sich kleinere positive Drehzahlen. In einer aktiven Übungsphase, wo die Kurbel 1 entgegen der an ihr angreifenden Antriebskraft durchgezogen wird, ergeben sich kleinere negative Drehzahlen des Motors. Die Frequenz des Drehstroms wird in allen diesen Fällen mittels des Frequenzumrichters 5 so eingestellt, daß die optimale Schlupfdrehzahl erreicht wird. In der Regel genügt es, wenn die Schlupfdrehzahl konstant gehalten wird.

Sofern ein Frequenzumrichter mit sensorabhängiger Regelung, z.B. sensorabhängiger Vektorregelung Verwendung findet, wird dem Frequenzumrichter ein aus der Drehzahl des Motors abgeleitetes Signal zugeführt. Im dargestellten Beispiel ist der Frequenzumrichter 5 ein solcher mit sensorloser Regelung, z.B. sensorloser Vektorregelung. Dementsprechend sind in den Frequenzumrichter 5 alle motorspezifischen Daten eingespeichert, aus denen eine integrierte Recheneinrichtung unter gleichzeitiger Verwendung von intern gewonnenen Daten die Belastung und die Drehzahl des Motors 2 errechnet, so daß eine direkte Beaufschlagung des Frequenzumrichters 5 mit den Ausgangswerten eines die Motordrehzahl erfassenden Meßgliedes oder des Potentiometers 4 und dementsprechend ein hierfür geeigneter Eingang des Frequenzumrichters 5 entbehrlich sind. Dennoch ergibt sich hierbei eine hohe Genauigkeit bezüglich des gewünschten Drehmoments. Die Einspeicherung der maschinenspezifischen Daten in die die Recheneinrichtung 6 und von motorspezifischen Daten in den Frequenzumrichter 5 kann bei Probeläufen erfolgen.

## Patentansprüche

1. Trainingsgerät, insbesondere für Krafttraining, mit einer Drehmomenterzeugungseinrichtung, die einen Elektromotor (2) und ein Untersetzungsgetriebe (3) aufweist und deren Ausgang mit wenigstens einem der Übungsperson dargebotenen Übungsorgan (1) zusammenwirkt, wobei der Elektromotor (2) als Drehstrommotor ausgebildet ist, dem als Leistungsteil ein Frequenzumrichter (5) zugeordnet ist, mittels dessen die Frequenz und die Stärke des dem Elektromotor (2) zugeführten Drehstroms einstellbar sind, und wobei die Stromstärke zumindest in Abhängigkeit vom gewünschten Drehmoment einstellbar ist und ferner die Frequenz so einstellbar ist, daß die Drehzahl des Drehfelds des dem Elektromotor (2) zugeführten Drehstroms um eine vorgegebene Schlupfdrehzahl von der anhand der Meßwerte einer dem Ausgang der Drehmomenterzeugungseinrichtung zugeordneten Positionsmeßeinrichtung (4) errechenbaren tatsächlichen Drehzahl des Elektromotors (2) abweicht, **dadurch gekennzeichnet, daß** dem Frequenzumrichter (5) eine Recheneinrichtung (6) vorgeordnet ist, in die alle maschinenspezifischen Werte eingespeichert sind und ein gewünschtes Drehmoment eingebbar ist, und die dem Frequenzumrichter (5) zuleitbare, der Stärke und der Frequenz des dem Elektromotor (2) zuleitbaren Drehstroms zugeordnete Ausgangssignale erzeugt, wobei in die Recheneinrichtung als einzige Meßwerte diejenigen der Positionsmeßeinrichtung (4) eingehen.

2. Trainingsgerät nach Anspruch 1, **dadurch gekennzeichnet, daß** der Elektromotor (2) und das Untersetzungsgetriebe (3) zu einer als Getriebemotor ausgebildeten Baueinheit zusammengefaßt sind.

3. Trainingsgerät nach einem der vorhergehenden Ansprüche, **dadurch gekennzeichnet, daß** der Frequenzumrichter (5) als Frequenzumrichter mit sensorloser Regelung ausgebildet ist.

4. Trainingsgerät nach einem der vorhergehenden Ansprüche, **dadurch gekennzeichnet, daß** der Positionsmeßeinrichtung (4) eine Zeittakteinrichtung (17) zugeordnet ist und daß aus den Positionswerten der Positionsmeßeinrichtung (4) und den Zeitintervallen der Zeittakteinrichtung (17) in der Recheneinrichtung (6) die Geschwindigkeit und/oder Beschleunigung errechnet wird.

5. Trainingsgerät nach einem der vorhergehenden Ansprüche, **dadurch gekennzeichnet, daß** die mittels der Recheneinrichtung (6) erzeugbaren Ausgangssignale Spannungswerte sind.

6. Trainingsgerät nach einem der vorhergehenden Ansprüche, **dadurch gekennzeichnet, daß** die Recheneinrichtung (6) mit Tabellenregistern für die eingespeicherten, maschinenspezifischen Werte versehen ist.

7. Trainingsgerät nach einem der vorhergehenden Ansprüche, **dadurch gekennzeichnet, daß** eine vorzugsweise manuell bedienbare Bedieneinrichtung (9) zur Vorgabe des gewünschten Drehmoments vorgesehen ist.

8. Trainingsgerät nach einem der vorhergehenden Ansprüche 4 bis 7, **dadurch gekennzeichnet, daß** mittels der Recheneinrichtung (6) ein dem vorgegebenen Drehmoment entsprechendes Steuersignal in Abhängigkeit von der errechneten Beschleunigung veränderbar ist.

9. Trainingsgerät nach einem der vorhergehenden Ansprüche, **dadurch gekennzeichnet, daß** die Bedieneinrichtung (9) und/oder die Recheneinrichtung (6) mit einem zentralen Datenspeicher vernetzt und/oder mit einer Kundenidentifizierungseinrichtung (12) versehen ist bzw, sind.

## Claims

1. A training apparatus, in particular, for power training exercises, with a torque generator that contains an electric motor (2) and a step-down gear (3) and the output of which cooperates with at least one exercising element (1) for the person performing the exercises, wherein the electric motor (2) is realized in the form of a three-phase motor, the power section of which consists of a frequency converter (5) that makes it possible to adjust the frequency and the intensity of the three-phase current fed to the electric motor (2), wherein the current intensity can be adjusted at least in dependence on the desired torque, and wherein the frequency can be adjusted in such a way that the rotational speed of the rotating field of the three-phase current fed to the electric motor (2) deviates from the actual rotational speed of the electric motor (2) which is calculated based on the measuring values of a position measuring device (4) assigned to the output of the torque generator by a predetermined slip speed, **characterized by** the fact that a computing device (6) in which all specific values of the machine are stored and into which a desired torque can be input is arranged upstream of the frequency converter (5), and by the fact that the computing device generates output signals that can be fed to the frequency converter (5) and are assigned to the intensity and the frequency of the three-phase current to be fed to the electric motor (2), wherein the only measuring values input into the computing device consist of the measuring values of the position measuring device (4).

2. A training apparatus according to claim 1, **characterized by** the fact that the electric motor (2) and the step-down gear (3) are combined into a unit that is realized in the form of a gear motor.

3. A training apparatus according to one of the preceding claims, **characterized by** the fact that the frequency converter (5) is realized in the form of a frequency converter with a control that contains no sensors.

4. A training apparatus according to one of the preceding claims, **characterized by** the fact that a timer (17) is assigned to the position measuring device (4), and by the fact that the speed and/or acceleration is/are calculated in the computing device (6) from the positional values of the position measuring device (4) and the time intervals of the timer (17).

5. A training apparatus according to one of the preceding claims, **characterized by** the fact that the output signals generated by means of the computing device (6) consist of voltage values.

6. A training apparatus according to one of the preceding claims, **characterized by** the fact that the computing device (6) is provided with table registers for the specific machine values to be stored.

7. A training apparatus according to one of the preceding claims, **characterized by** the fact that an operating unit (9) which is preferably actuated manually is provided for setting the desired torque.

8. A training apparatus according to one of claims 4-7, **characterized by** the fact that a control signal which corresponds to the set torque can be varied by means of the computing device (6) in dependence on the calculated acceleration.

9. A training apparatus according to one of the preceding claims, **characterized by** the fact that the operating unit (9) and/or the computing device (6) is/are linked to a central data memory and/or provided with a customer identification device (12).

## Revendications

1. Appareil de musculation, en particulier pour l'entraînement de musculation, avec un dispositif de génération de couple qui présente un moteur électrique (2) et un démultiplicateur (3) et dont la sortie agit de concert avec au moins un organe d'entraînement (1) offert à la personne qui s'entraîne, ledit moteur électrique (2) étant réalisé comme moteur triphasé auquel est associé un convertisseur de fréquence (5) comme élément de puissance, qui permet de régler la fréquence et l'intensité du courant triphasé amené au moteur électrique (2), et l'intensité de courant pouvant être réglée au moins en fonction du couple souhaité, et, en outre, la fréquence pouvant être réglée de telle manière que la vitesse de rotation du champ tournant du courant triphasé amené au moteur électrique (2) diffère d'une vitesse prédéterminée de glissement de la vitesse réelle de rotation du moteur électrique (2) qui peut être calculée au moyen des valeurs de mesure d'un dispositif de mesure de position (4) associé à la sortie du dispositif de génération de couple, **caractérisé par le fait qu'**un dispositif de calcul (6) est placé avant le convertisseur de fréquence (5), dans lequel sont mémorisées toutes les valeurs spécifiques à la machine et où l'on peut introduire un couple souhaité et qui génère des signaux de sortie qui peuvent être amenés au convertisseur de fréquence (5) et qui sont associés à l'intensité et à la fréquence du courant triphasé lequel peut être amené au moteur électrique (2), les seules valeurs de mesure qui sont introduites dans le dispositif de calcul étant celles du dispositif de mesure de position (4).

2. Appareil de musculation selon la revendication 1, **caractérisé par le fait que** ledit moteur électrique (2) et le démultiplicateur (3) sont réunis pour former un ensemble réalisé comme moteur à engrenage.

3. Appareil de musculation selon l'une des revendications précédentes, **caractérisé par le fait que** le convertisseur de fréquence (5) est réalisé comme convertisseur de fréquence à réglage sans capteur.

4. Appareil de musculation selon l'une des revendications précédentes, **caractérisé par le fait qu'**un horloge (17) est associé au dispositif de mesure de position (4) et que la vitesse et/ou l'accélération est ou bien sont calculée(s) dans le dispositif de calcul (6) à partir des valeurs de position du dispositif de mesure de position (4) et des intervalles de temps de l'horloge (17).

5. Appareil de musculation selon l'une des revendications précédentes, **caractérisé par le fait que** les signaux de sortie qui peuvent être générés au moyen du dispositif de calcul (6) sont des valeurs de tension.

6. Appareil de musculation selon l'une des revendications précédentes, **caractérisé par le fait que** le dispositif de calcul (6) est pourvu de registres de tables pour les valeurs mémorisées spécifiques à la machine.

7. Appareil de musculation selon l'une des revendications précédentes, **caractérisé par le fait que** l'on prévoit un dispositif de manoeuvre (9) pour déterminer le couple souhaité, qui, de préférence, peut être manoeuvré manuellement.

8. Appareil de musculation selon l'une des revendications 4 à 7, **caractérisé par le fait qu'**un signal de commande correspondant au couple déterminé peut être modifié au moyen du dispositif de calcul (6) en fonction de l'accélération calculée.

9. Appareil de musculation selon l'une des revendications précédentes, **caractérisé par le fait que** le dispositif de manoeuvre (9) et/ou le dispositif de calcul (6) est ou bien sont connecté(s) en réseau avec une mémoire centrale de données et/ou est ou bien sont pourvu(s) d'un dispositif d'identification de client (12).
